# EUROPEAN PATENT APPLICATION

(11) **EP 4 459 693 A1**
(43) Date of publication of application: **06.11.2024**
(21) Application number: 23763492.8
(22) Date of filing: 01.03.2023
(51) Int. Cl.: H01M 4/13, H01G 11/24, H01G 11/40, H01G 11/42, H01M 4/36, H01M 4/62

(54) **POWER STORAGE ELEMENT AND POWER STORAGE DEVICE**

(30) Priority: 03.03.2022 JP 2022032975
(71) Applicant: GS Yuasa International Ltd., Kisshoin, Minami-ku, Kyoto-shi, Kyoto 601-8520 (JP)
(72) Inventor: OTANI, Shinya, Kyoto-shi, Kyoto 601-8520 (JP)
(74) Representative: Isarpatent
(86) International application number: PCT/JP2023/007572
(87) International publication number: WO 2023/167235

(57) **Abstract**

An energy storage device according to an aspect of the present invention includes a positive electrode including a positive active material layer, the positive active material layer contains first positive active material particles, second positive active material particles, and fibrous carbon, the first positive active material particles are primary particles or secondary particles of primary particles aggregated, the ratio of a particle size to an average primary particle size for the first positive active material particles is 3 or less, the second positive active material particles are secondary particles of primary particles aggregated, and the ratio of a particle size to an average primary particle size for the second positive active material particles is more than 3.

## Description

### TECHNICAL FIELD

The present invention relates to an energy storage device and an energy storage apparatus.

### BACKGROUND ART

Nonaqueous electrolyte secondary batteries typified by lithium ion secondary batteries are often used for electronic devices such as personal computers and communication terminals, motor vehicles, and the like, because the batteries are high in energy density. The nonaqueous electrolyte secondary batteries generally include a pair of electrodes electrically separated from each other by a separator, and a nonaqueous electrolyte interposed between the electrodes, and are configured to allow charge transport ions to be transferred between the two electrodes for charge-discharge. Also, capacitors such as lithium ion capacitors and electric double-layer capacitors, energy storage devices with electrolytes other than nonaqueous electrolyte used, and the like are also widely used as energy storage devices other than nonaqueous electrolyte secondary batteries.

Positive active materials composed of secondary particles of primary particles aggregated and positive active materials composed of single particles of primary particles dispersed without being aggregated are known as positive active materials for use in the energy storage devices. As a positive active material of single particles, Patent Document 1 describes an invention of a positive active material for a nonaqueous secondary battery, which is a powdery lithium-composite oxide of monodispersed primary particles containing one element selected from the group consisting of Co, Ni, and Mn and lithium as main components.

### PRIOR ART DOCUMENT

### PATENT DOCUMENT

Patent Document 1: JP-A-2004-355824

### SUMMARY OF THE INVENTION

### PROBLEMS TO BE SOLVED BY THE INVENTION

As compared with positive active material particles that are secondary particles with a large number of primary particles aggregated, positive active material particles that are present as primary particles that are substantially not aggregated and positive active material particles that are secondary particles with a relatively small number of primary particles aggregated have small numbers of grain boundaries, and thus, are less likely to be cracked or the like with grain boundaries in association with a charge-discharge cycle as starting points. For this reason, energy storage devices in which these particles are used have advantages such as a small decrease in capacity in association with a charge-discharge cycle. Hereinafter, the "positive active material particles that are present as primary particles that are substantially not aggregated, or positive active material particles that are secondary particles with a relatively small number of primary particles aggregated" are referred to also as a "single particle-based positive active material particles". In the energy storage devices in which the single particle-based positive active material particles are used, however, the initial alternating-current resistances are relatively high, and the alternating-current resistances may be increased with the charge-discharge cycle.

An object of the present invention is to provide an energy storage device and an energy storage apparatus, which are capable of reducing an initial alternating-current resistance and suppressing an increase in alternating-current resistance in association with a charge-discharge cycle.

### MEANS FOR SOLVING THE PROBLEMS

An energy storage device according to an aspect of the present invention includes a positive electrode including a positive active material layer, the positive active material layer contains first positive active material particles, second positive active material particles, and fibrous carbon, the first positive active material particles are primary particles or secondary particles of primary particles aggregated, the ratio of a particle size to an average primary particle size for the first positive active material particles is 3 or less, the second positive active material particles are secondary particles of primary particles aggregated, and the ratio of a particle size to an average primary particle size for the second positive active material particles is more than 3.

An energy storage apparatus according to another aspect of the present invention includes two or more energy storage devices, and one or more energy storage devices according to an aspect of the present invention.

### ADVANTAGES OF THE INVENTION

The energy storage device and the energy storage apparatus according to an aspect of the present invention are capable of reducing an initial alternating-current resistance and suppressing an increase in alternating-current resistance in association with a charge-discharge cycle.

### BRIEF DESCRIPTION OF THE DRAWINGS

Fig. 1 is a see-through perspective view illustrating an embodiment of an energy storage device.
Fig. 2 is a schematic diagram illustrating an embodiment of an energy storage apparatus including a plurality of energy storage devices.

### MODE FOR CARRYING OUT THE INVENTION

An embodiment of the present invention provides the following aspects.

### Item 1.

An energy storage device according to an embodiment of the present invention includes a positive electrode including a positive active material layer, the positive active material layer contains first positive active material particles, second positive active material particles, and fibrous carbon, the first positive active material particles are primary particles or secondary particles of primary particles aggregated, the ratio of a particle size to an average primary particle size for the first positive active material particles is 3 or less, the second positive active material particles are secondary particles of primary particles aggregated, and the ratio of a particle size to an average primary particle size for the second positive active material particles is more than 3.

The energy storage device described in item 1 is capable of reducing an initial alternating-current resistance, and suppressing an increase in alternating-current resistance in association with a charge-discharge cycle.

### Item 2.

In the energy storage device according to item 1, the first positive active material particles may be smaller in average particle size than the second positive electrode active material particles.

The energy storage device described in item 2 is capable of further reducing an initial alternating-current resistance, and suppressing an increase in alternating-current resistance in association with a charge-discharge cycle.

### Item 3.

In the energy storage device according to item 1 or 2, the content ratio of the second active material particles to the total content of the first positive active material particles and the second positive active material particles may be 70% by mass or more and 90% by mass or less.

The energy storage device described in item 3 is capable of further reducing an initial alternating-current resistance, and suppressing an increase in alternating-current resistance in association with a charge-discharge cycle.

### Item 4.

In the energy storage device according to any one of items 1 to 3, the positive active material layer may further contain another conductive agent besides the fibrous carbon.

The energy storage device described in item 4 is capable of further reducing an initial alternating-current resistance, and suppressing an increase in alternating-current resistance in association with a charge-discharge cycle.

### Item 5.

In the energy storage device according to any one of items 1 to 4, the other conductive agent may be a particulate conductive agent.

The energy storage device described in item 5 is capable of further reducing an initial alternating-current resistance, and suppressing an increase in alternating-current resistance in association with a charge-discharge cycle.

### Item 6.

In the energy storage device according to any one of items 1 to 5, the fibrous carbon may be carbon nanotubes.

The energy storage device described in item 6 is capable of further reducing an initial alternating-current resistance, and suppressing an increase in alternating-current resistance in association with a charge-discharge cycle.

### Item 7.

In the energy storage device according to item 6, the carbon nanotubes may be single-walled carbon nanotubes, and the content of the single-walled carbon nanotubes in the positive active material layer may be 0.07% by mass or more.

The energy storage device described in item 7 is capable of further reducing an initial alternating-current resistance, and suppressing an increase in alternating-current resistance in association with a charge-discharge cycle.

### Item 8.

In the energy storage device according to item 6, the carbon nanotubes may be multi-walled carbon nanotubes, and the content of the multi-walled carbon nanotubes in the positive active material layer may be 0.3% by mass or more.

The energy storage device described in item 8 is capable of further reducing an initial alternating-current resistance, and suppressing an increase in alternating-current resistance in association with a charge-discharge cycle.

### Item 9.

An energy storage apparatus according to an embodiment of the present invention includes two or more energy storage devices, and one or more energy storage devices described in any one of items 1 to 8.

The energy storage apparatus described in item 9 is capable of reducing an initial alternating-current resistance, and suppressing an increase in alternating-current resistance in association with a charge-discharge cycle.

First, outlines of an energy storage device and an energy storage apparatus disclosed in the present specification will be described.

An energy storage device according to an aspect of the present invention includes a positive electrode including a positive active material layer, the positive active material layer contains first positive active material particles, second positive active material particles, and fibrous carbon, the first positive active material particles are primary particles or secondary particles of primary particles aggregated, the ratio of a particle size to an average primary particle size for the first positive active material particles is 3 or less, the second positive active material particles are secondary particles of primary particles aggregated, and the ratio of a particle size to an average primary particle size for the second positive active material particles is more than 3.

In the energy storage device, the positive active material layer contains the first positive active material particles, the second positive active material particles, and the fibrous carbon, the first positive active material particles are primary particles or secondary particles, the ratio of the particle size to the average primary particle size for the first positive active material particles is 3 or less, the second positive active material particles are secondary particles, and the ratio of the particle size to the average primary particle size for the second positive active material particles is more than 3, and thus, the energy storage device is capable of reducing an initial alternating-current resistance, and suppressing an increase in alternating-current resistance in association with a charge-discharge cycle. In this regard, the first positive active material particles correspond to single particle-based positive active material particles. Hereinafter, the second positive active material particles are referred to also as "secondary particle-based positive active material particles".

The reasons therefor are not clear, but the following reasons are presumed. When the single particle-based positive active material particles are used in combination with a particulate conductive agent such as carbon black, which is common as a conductive agent, because of the point contacts between the positive active material particles and the particulate conductive agent, conductive paths between the positive active material particles or between the positive active material particles and the conductive agent fail to be sufficiently secured, and initial alternating-current resistance is likely to be increased. In addition, the present inventor has found that the use of the single particle-based positive active material particles and the fibrous carbon in combination reduces the initial alternating-current resistance, but increases the expansion of the positive active material layer in association with a charge-discharge cycle due to the expansion of the single particle-based positive active material particles, and causes the fibrous carbon to fail to follow the expansion and thus causes the conductive paths between the positive active material particles and between the positive active material particles and the conductive agent to be no longer maintained, thereby increasing the alternating-current resistance. On the other hand, the present inventor has found that the use of the secondary particle-based positive active material particles in combination with carbon black, or with carbon black and fibrous carbon provide a good initial alternating-current resistance, but causes the positive active material particles to be cracked in association with a charge-discharge cycle, and thus causes conductive paths to be no longer maintained inside the positive active material particles, thereby increasing the alternating-current resistance. In contrast, in the energy storage device, the single particle-based positive active material particles and the secondary particle-based positive active material particles, and the fibrous carbon are used in combination, and thus the expansion of the positive active material layer in association with a charge-discharge cycle is considered to be suppressed, and conductive paths connecting the positive active material particles are considered to be more likely to be formed by the fibrous carbon. Accordingly, the energy storage device is presumed to be capable of reducing an initial alternating-current resistance, and suppressing an increase in alternating-current resistance in association with a charge-discharge cycle.

The "particle sizes" of the first positive active material particle and second positive active material particle are particle sizes of respective positive active material particles, measured with hundred particles extracted from an SEM (scanning electron microscope) image of the positive active material particles, excluding extremely large particles and extremely small particles, and the "average particle sizes" of the first positive active material particles and second positive active material particles are average values of the "particle sizes" mentioned above. In addition, the "average particle sizes" of the first positive active material particle and second positive active material particle are average values of the primary particle sizes of primary particles constituting respective positive active material particles, measured with hundred particles extracted from an SEM image of the positive active material particles, excluding extremely large particles and extremely small particles. The particle sizes and primary particle sizes of the respective positive active material particles, based on the SEM image, are determined as follows.

### (1) Preparation of sample for measurement

The positive electrode to be measured is fixed with a thermosetting resin. With the use of a cross-section polisher, a cross section of the positive electrode fixed with the resin is exposed to prepare a sample for measurement. It is to be noted that the positive electrode to be measured are prepared in accordance with the following procedure. When the positive electrode before assembling the energy storage device can be prepared, the negative electrode is used as it is. In the case of preparing from the assembled energy storage device, first, the energy storage device is subjected to constant current discharge at a current of 0.1C to an end-of-discharge voltage under normal usage, into a discharged state. Further, the "under normal usage" refers to a case of using the energy storage device while employing charge-discharge conditions recommended or specified for the energy storage device. The energy storage device in the discharged state is disassembled, the positive electrode is taken out, components (electrolyte and the like) adhering to the positive electrode are then sufficiently washed with a dimethyl carbonate, and then, the positive electrode is dried under reduced pressure at room temperature for 24 hours. The operations from the disassembly of the energy storage device to the preparation of the positive electrode to be measured are performed in a dry air atmosphere with a dew point of -40°C or lower.

### (2) Acquisition of SEM image

For acquiring an SEM image, JSM-7001F (manufactured by JEOL Ltd.) is used as a scanning electron microscope. For the SEM image, a secondary electron image is observed. The acceleration voltage is 15 kV. The observation magnification is set such that the number of positive active material particles appearing in one field of view is three or more and fifteen or less. The obtained SEM image is stored as an image file. In addition, various conditions such as spot diameter, working distance, irradiation current, luminance, and focus are appropriately set so as to make the contour of the positive active material particles clear.

### (3) Calculation of particle size and primary particle size of positive active material particles

From the SEM image acquired, hundred positive active material particles are arbitrarily extracted while excluding extremely large particles and extremely small particles, and the particle sizes of the positive active material particles are measured. The shortest diameter passing through the center of the minimum circumscribed circle of the positive active material particle is defined as a minor axis, and the diameter passing through the center and orthogonal to the minor axis is defined as a major axis. The average value of the major axis and the minor axis is defined as the particle size of the positive active material particle. When there are two or more shortest diameters, the shortest diameter with the longest orthogonal diameter is defined as the minor axis. The primary particle size of a primary particle constituting each of the positive active material particles is measured in accordance with the same procedure. The primary particle is a particle in which no grain boundary is observed in appearance in the SEM image. The average value of the primary particle sizes of primary particles constituting the respective positive active material particles is defined as an "average primary particle size" of the positive active material particles. For each of the positive active material particle, the ratio of the particle size to the average primary particle size is calculated. The particles with the ratio of 3 or less are the first positive active material particles, and the particles with the ratio of more than 3 are the second positive active material particles. More specifically, the respective positive active material particles are classified into the first positive active material particles or the second positive active material particles on the basis of whether the ratio of the particle size to the average primary particle size is 3 or less. When the positive active material particles are present as primary particles, the ratio is 1, and the particle size and the average primary particle size coincide with each other. The average value of the ratios of the particle sizes to the average primary particle sizes for the respective first positive active material particles is referred to as "the ratio of the particle size to the average primary particle size for the first positive active material particles", and the average value of the ratios of the particle sizes to the average primary particle sizes for the respective second positive active material particles is referred to as "the ratio of the particle size to the average primary particle size for the second positive active material particles". The average value of the particle sizes of the first positive active material particles is referred to as an "average particle size of the first positive active material particles", and the average value of the particle sizes of the second positive active material particles is referred to as an "average particle size of the second positive active material particles".

The average particle size of the first positive active material particles is preferably smaller than the average particle size of the second positive active material particles. The average particle size of the first positive active material particles is smaller than the average particle size of the second positive active material particles, thereby allowing an increase in alternating-current resistance in association with a charge-discharge cycle to be further suppressed. The reason therefor is presumed to be that the packing density of the positive active material layer containing the first positive active material particles and the second positive active material particles can be further increased, thus making conductive paths between the positive active material particles more likely to be secured.

The content ratio of the second active material particles to the total content of the first positive active material particles and the second positive active material particles is preferably 70% by mass or more and 90% by mass or less. The content ratio of the second positive active material particles to the total content of the first positive active material particles and the second positive active material particles is equal to or more than the lower limit mentioned above and equal to or less than the upper limit mentioned above, thereby allowing the density of the positive active material layer to be further increased, and thus, for example, a high energy density can be secured while sufficiently reducing the initial alternating-current resistance.

The positive active material layer preferably further contains another conductive agent besides the fibrous carbon.

The positive active material layer further contains another conductive agent besides the fibrous carbon, thereby allowing the initial alternating-current resistance to be further reduced, and allowing an increase in alternating-current resistance in association with a charge-discharge cycle to be suppressed.

The other conductive agent mentioned above is preferably a particulate conductive agent.

The other conductive agent is preferably a particulate conductive agent, thereby allowing the initial alternating-current resistance to be further reduced, and allowing an increase in alternating-current resistance in association with a charge-discharge cycle to be suppressed.

The fibrous carbon is preferably carbon nanotubes.

The fibrous carbon is preferably carbon nanotubes, thereby allowing the initial alternating-current resistance to be further reduced, and allowing an increase in alternating-current resistance in association with a charge-discharge cycle to be suppressed.

Preferably, the carbon nanotubes are single-walled carbon nanotubes, with the content of the single-walled carbon nanotubes in the positive active material layer being 0.07% by mass or more.

The carbon nanotubes are single-walled carbon nanotubes, with the content of the single-walled carbon nanotubes in the positive active material layer being 0.07% by mass or more, thereby allowing the initial alternating-current resistance to be further reduced, and allowing an increase in alternating-current resistance in association with a charge-discharge cycle to be suppressed.

Preferably, the carbon nanotubes are multi-walled carbon nanotubes, with the content of the multi-walled carbon nanotubes in the positive active material layer being 0.3% by mass or more.

The carbon nanotubes are multi-walled carbon nanotubes, with the content of the multi-walled carbon nanotubes in the positive active material layer being 0.3% by mass or more, thereby allowing the initial alternating-current resistance to be further reduced, and allowing an increase in alternating-current resistance in association with a charge-discharge cycle to be suppressed.

An energy storage apparatus according to an aspect of the present invention includes two or more energy storage devices and one or more energy storage devices according to an aspect of the present invention. The energy storage apparatus includes the energy storage device according to an of the present invention, thus allowing the initial alternating-current resistance to be further reduced, and allowing an increase in alternating-current resistance in association with a charge-discharge cycle to be suppressed.

The configuration of an energy storage device, the configuration of an energy storage apparatus, and a method for manufacturing the energy storage device according to an embodiment of the present invention, and other embodiments will be described in detail. It is to be noted that the names of the respective constituent members (respective constituent elements) for use in the respective embodiments may be different from the names of the respective constituent members (respective constituent elements) for use in the background art.

### <Configuration of energy storage device>

An energy storage device according to an embodiment of the present invention includes: an electrode assembly including a positive electrode, a negative electrode, and a separator; a nonaqueous electrolyte; and a case that houses the electrode assembly and the nonaqueous electrolyte. The electrode assembly is typically a stacked type assembly that has a plurality of positive electrodes and a plurality of negative electrodes stacked with separators interposed therebetween, or a wound type assembly that has stacked positive and negative electrodes wound with a separator interposed therebetween. The nonaqueous electrolyte is present in a state of being contained in the positive electrode, the negative electrode, and the separator. A nonaqueous electrolyte secondary battery (hereinafter, also referred to simply as a "secondary battery") will be described as an example of the energy storage device.

### (Positive electrode)

The positive electrode includes a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of 10⁷ Ω·cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate is preferably 3 pm or more and 50 pm or less, more preferably 5 pm or more and 40 pm or less, still more preferably 8 pm or more and 30 pm or less, particularly preferably 10 pm or more and 25 pm or less. The average thickness of the positive substrate falls within the range mentioned above, thereby making it possible to increase the energy density per volume of the energy storage device while increasing the strength of the positive substrate.

The intermediate layer is a layer disposed between the positive substrate and the positive active material layer. The intermediate layer includes a conductive agent such as carbon particles, thereby reducing contact resistance between the positive substrate and the positive active material layer. The configuration of the intermediate layer is not particularly limited, and includes, for example, a binder and a conductive agent.

The positive active material layer includes first positive active material particles, second positive active material particles, and fibrous carbon. The positive active material layer includes optional components such as a conductive agent other than the fibrous carbon, a binder, a thickener, and a filler, if necessary.

The first positive active material particles are single particle-based positive active material particles that are: primary particles that are not substantially aggregated; or secondary particles of primary particles aggregated and of 3 or less in the ratio of the particle size to the average primary particle size. The use of the first positive active material particles as the positive active material particles has advantages such as the fact that the positive active material particles are less likely to be cracked or the like with grain boundaries in association with a charge-discharge cycle as starting points, thereby leading to a high capacity retention ratio. The second positive active material particles are positive active material particles that are secondary particles of primary particles aggregated and of more than 3 in the ratio of the particle size to the average primary particle size. The use of the second positive active material particles as the positive active material particles allows the positive active material layer to be kept from undergoing expansion in association with a charge-discharge cycle. Furthermore, the positive active material layer contains the first positive active material particles and the second positive active material particles, thereby allowing an increase in alternating-current resistance in association with a charge-discharge cycle to be suppressed.

The average particle size of the first positive active material particles is preferably smaller than the average particle size of the second positive active material particles. The average particle size of the first positive active material particles is smaller than the average particle size of the second positive active material particles, thereby allowing an increase in alternating-current resistance in association with a charge-discharge cycle to be further suppressed.

The average particle size of the first positive active material particles is, for example, preferably 2.0 pm or more and less than 8.5 pm, more preferably 3.0 pm or more and 7.0 pm or less, still more preferably 3.5 pm or more and 6.0 pm or less. The average particle size of the first positive active material particles falls within the range mentioned above, thereby allowing a good charge-discharge capacity to be obtained while reducing the initial alternating-current resistance.

The ratio of the particle size to the average primary particle size for the first positive active material particles is 3 or less, preferably 2 or less, more preferably 1.5 or less, still more preferably 1.2 or less. The ratio of the particle size to the average primary particle size for the first positive active material particles is equal to or less than the above upper limit, thereby allowing the advantages of the single particle-based positive active material particles to be sufficiently produced, such as the fact that the positive active material particles are less likely to be cracked or the like with grain boundaries as starting points, in association with a charge-discharge cycle, thereby leading to a high capacity retention ratio.

The average particle size of the second positive active material particles is, for example, preferably 8.5 pm or more and less than 14.0 pm, more preferably 9.0 pm or more and 13.5 pm or less, still more preferably 9.5 pm or more and 13.0 pm or less. The average particle size of the second positive active material particles within the range mentioned above tends to reduce the expansion of the positive active material layer in association with a charge-discharge cycle, and further suppress an increase in alternating-current resistance in association with a charge-discharge cycle.

The ratio of the particle size to the average primary particle size for the second positive active material particles is more than 3, preferably 15.0 or more, more preferably 20.0 or more, still more preferably 24.0 or more. The ratio of the particle size to the average primary particle size for the second positive active material particles is equal to or more than the lower limit mentioned above, thereby allowing the advantages of the secondary particle-based positive active material particles to be sufficiently produced, such as reducing the expansion of the positive active material layer in association with a charge-discharge cycle, and further suppressing an increase in alternating-current resistance in association with a charge-discharge cycle. The upper limit of the ratio of the particle size to the average primary particle size for the second positive active material particles is not particularly limited, but may be 50.0.

The ratio of the average particle size of the second positive active material particles to the average particle size of the first positive active material particles is preferably 1.3 or more and 4.5 or less, more preferably 1.6 or more and 3.7 or less. The ratio of the average particle size of the second positive active material particles to the average particle size of the first positive active material particles is equal to or more than the lower limit mentioned above and equal to or less than the upper limit mentioned above, thereby allowing the packing density of the positive active material layer containing the first positive active material particles and the second positive active material particles to be further increased, and thus allowing an increase in alternating-current resistance in association with a charge-discharge cycle to be further suppressed.

The first positive active material particles and second positive active material particles with the predetermined particle sizes can be produced by a known method, and the primary particle size and the like can be controlled by the production conditions. In addition, commercially available products may be used for the first positive active material particles and second positive active material particles with the predetermined particle sizes. In the process of producing the positive active material particles, increasing the firing temperature or prolonging the firing time allows crystals of primary particles to grow to increase the average primary particle size. Alternatively, the primary particles can be formed by crushing secondary particles. For obtaining the first positive active material particles and second positive active material particles with the predetermined particle sizes, a crusher, a classifier, or the like can also be used. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As the classification method, a sieve, a wind classifier, or the like is used both in dry manner and in wet manner, if necessary.

The first positive active material particles and the second positive active material particles can be appropriately selected from known positive active material particles. As a material constituting the known positive active material particles for a lithium ion secondary battery, a material capable of occluding and releasing lithium ions is typically used. Examples of the material constituting the positive active material particles include lithium-transition metal composite oxides that have an α-NaFeO₂-type crystal structure, lithium-transition metal oxides that have a spinel-type crystal structure, polyanion compounds, chalcogenides, and sulfur. Examples of the lithium-transition metal composite oxides that have an α-NaFeO₂-type crystal structure include Li[LiₓNi₍₁₋ₓ₎]O₂ (0 ≤ x < 0.5), Li[LiₓNi_{y}Co₍₁-ₓ-_{y)}]O₂ (0 <_ x < 0.5, 0 < y < 1), Li[LiₓCo₍₁-ₓ₎]O₂ (0 <_ x < 0.5), Li[LiₓNi_{y}Mn₍₁-ₓ-_{y)}]O₂ (0 <_ x < 0.5, 0 < y < 1), Li[LiₓNi_{γ}Mn_{β}Co_{(1-x-γ-β)}]O₂ (0 <_ x < 0.5, 0 < γ, 0 < β, 0.5 < γ + β < 1), and Li[LiₓNi_{γ}Co_{β}Al_{(1-x-γ-β)}]O₂ (0 ≤ x < 0.5, 0 < γ, 0 < β, 0.5 < γ + β < 1). Examples of the lithium-transition metal composite oxides that have a spinel-type crystal structure include LiₓMn₂O₄ and LiₓNi_{γ}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogenides include a titanium disulfide, a molybdenum disulfide, and a molybdenum dioxide. Some of atoms or polyanions in these materials may be substituted with atoms or anion species composed of other elements. These materials may have surfaces coated with other materials. In the positive active material particles, one of these materials may be used alone, or two or more thereof may be used in mixture, but one of the materials is preferably used alone.

As a material constituting the first positive active material particles and the second positive active material particles, a lithium-transition metal composite oxide is preferable, a lithium-transition metal composite oxide containing a nickel element, a cobalt, and a manganese or aluminum element is more preferable, and a lithium-transition metal composite oxide containing a nickel element, a cobalt element, and a manganese element is still more preferable. The lithium-transition metal composite oxide preferably has an α-NaFeO₂-type crystal structure. The use of such a lithium-transition metal composite oxide allows the energy density to be increased, for example. In addition, these lithium-transition metal composite oxides are generally produced and often used in the form of a secondary particle of a large number of primary particles aggregated. Therefore, in an embodiment of the present invention, the use of these lithium-transition metal composite oxides for the first positive active material particles allows the achievement of, in addition to the advantages of the high energy density and the like of these lithium-transition metal composite oxides, a good function that has both a high capacity retention ratio obtained by the single-particle-based particles and a low initial alternating-current resistance obtained by the use of the particles in combination with the fibrous carbon.

As the lithium-transition metal composite oxide that has an α-NaFeO₂-type crystal structure, a compound represented by the following formula (1) is preferable.

Li_{1+α}Me₁-_{α}O₂ ... (1)

In the formula (1), Me is a metal element (excluding Li) containing: Ni; Co; and Mn or Al. The condition of 0 ≤ α < 1 is met.

Me in the formula (1) is preferably composed substantially of three elements of Ni, Co and Mn, or three elements of Ni, Co and Al, and more preferably composed of three elements of Ni, Co and Mn. Me may, however, contain other metal elements.

From viewpoints such as further increasing the electric capacity, the suitable content (composition ratio) of each of the constituent elements in the compound represented by the formula (1) is as follows. It is to be noted that the molar ratio is equal to the atomic number ratio.

In the formula (1), the lower limit of the molar ratio (Ni/Me) of Ni to Me is preferably 0.1, and more preferably 0.2, 0.3, or 0.4 in some cases. In contrast, the upper limit of the molar ratio (Ni/Me) is preferably 0.9, and more preferably 0.8, 0.7, or 0.6 in some cases.

In the formula (1), the lower limit of the molar ratio (Co/Me) of Co to Me is preferably 0.01, and more preferably 0.1 or 0.2 in some cases. In contrast, the upper limit of the molar ratio (Co/Me) is preferably 0.5, and more preferably 0.4 or 0.3 in some cases.

In the formula (1), the lower limit of the molar ratio (Mn/Me) of Mn to Me may be 0, and is preferably 0.05, and more preferably 0.1 or 0.2 in some cases. In contrast, the upper limit of the molar ratio (Mn/Me) is preferably 0.6, and more preferably 0.4 or 0.3 in some cases.

In the formula (1), the lower limit of the molar ratio (Al/Me) of Al to Me may be 0, and is preferably 0.01, and more preferably 0.02 or 0.03 in some cases. In contrast, the upper limit of the molar ratio (Al/Me) is preferably 0.3, and more preferably 0.2 or 0.1 in some cases.

In the formula (1), the molar ratio (Li/Me) of Li to Me, that is, (1 + α)/(1 - α), may be 1, and is more than 1.0 (α > 0) or 1.1 or more in some cases. In contrast, the upper limit of the molar ratio (Li/Me) is preferably 1.6, and more preferably 1.4 or 1.2 in some cases.

Further, the composition ratio of the lithium-transition metal composite oxide refers to a composition ratio in the case of a completely discharged state provided by the following method. First, the energy storage device is subjected to constant current charge with a current of 0.05 C until the voltage reaches an end-of-charge voltage under normal usage to be brought into a fully charged state. After a 30-minute pause, the energy storage device is subjected to constant current discharge with a current of 0.05 C to the lower limit voltage under normal usage. The energy storage device is disassembled to take out the positive electrode, and a test battery with a metal lithium electrode as a counter electrode is assembled, and subjected to constant current discharge at a current value of 10 mA per 1 g of the positive active material until the positive potential reaches 2.0 V vs. Li/Li⁺, thereby adjusting the positive electrode to the completely discharged state. The battery is disassembled again, and the positive electrode is taken out. The nonaqueous electrolyte attached to the positive electrode taken out is sufficiently washed with a dimethyl carbonate, and the positive electrode is dried at room temperature for a whole day and night, and the lithium-transition metal composite oxide of the positive active material is then collected. The collected lithium-transition metal composite oxide is subjected to measurement. The operations from the disassembly of the energy storage device to the collection of the lithium-transition metal composite oxide are performed in an argon atmosphere with a dew point of - 60°C or lower. The term of under normal usage herein refers to a case of using the energy storage device while employing charge-discharge conditions recommended or specified for the energy storage device, and when a charger for the energy storage device is prepared, refers to a case of using the energy storage device with the charger applied.

Examples of suitable lithium-transition metal composite oxides include LiNi_{1/3}Co_{1/3}Mn_{1/3}O₂, LiNi_{3/5}Co_{1/5}Mn_{1/5}O₂, LiNi_{1/2}Co_{1/5}Mn_{3/10}O₂, L₁Ni_{1/2}Co_{3/10}M_{1/5}O₂, LiNi_{8/10}Co_{1/10}Mn_{1/10}O₂, and LiNi_{0.8}Co_{0.15}Al_{0.05}O₂. Among these examples, LiNi_{3/5}Co_{1/5}Mn_{1/5}O₂, L₁Ni_{1/2}Co_{1/5}Mn_{3/10}O₂, L₁Ni_{1/2}Co_{3/10}M_{1/5}O₂, LiNi_{8/10}Co_{1/10}Mn_{1/10}O₂, and LiNi_{0.8}Co_{0.15}Al_{0.05}O₂ are more preferable.

Above all, the positive active material preferably contains the lithium-transition metal composite oxide in a proportion of 50% by mass or more (preferably 70 to 100% by mass, more preferably 80 to 100% by mass) of all in the positive active material layer, and it is more preferable to use a positive active material substantially composed only of the lithium-transition metal composite oxide.

The content ratio of the second positive active material particles to the total content of the first positive active material particles and the second positive active material particles is preferably 70% by mass or more and 90% by mass or less, more preferably 70% by mass or more and 80% by mass or less. The content ratio of the second positive active material particles to the total content of the first positive active material particles and the second positive active material particles is equal to or more than the lower limit mentioned above and equal to or less than the upper limit mentioned above, thereby allowing the packing density of the positive active material layer to be further increased, and thus, for example, a high energy density can be secured while sufficiently reducing the initial alternating-current resistance.

The content of the positive active material particles (the total of the first positive active material particles and the second positive active material particles) in the positive active material layer is preferably 80% by mass or more and 99% by mass or less, more preferably 85% by mass or more and 98% by mass or less, more preferably 90% by mass or more and 97% by mass or less. The content of the positive active material particles in the positive active material layer falls within the range mentioned above, thereby allowing the conductivity and energy density of the positive active material layer to be increased in a well-balanced manner.

The fibrous carbon is a component that functions as a conductive agent in the positive active material layer. The fibrous carbon is not particularly limited as long as the carbon is a fibrous carbon material. Examples of the fibrous carbon include carbon nanofibers, pitch-based carbon fibers, and carbon nanotubes (CNTs), and CNTs that are graphene-based carbon can be suitably used. The CNT may be a single-walled carbon nanotube or a multi-walled carbon nanotube.

The average diameter of the fibrous carbon may be, for example, 1 nm or more and 300 nm or less, but is preferably 3 nm or more and 100 nm or less, more preferably 5 nm or more and 50 nm or less, still more preferably 10 nm or more and 30 nm or less. The average diameter of the fibrous carbon falls within the range mentioned above, thereby improving the conductivity of the positive active material layer, and further reducing the initial alternating-current resistance. The "average diameter" of the fibrous carbon is the average value of the diameters of arbitrary ten fibers of the fibrous carbon observed with an SEM or a transmission electron microscope (TEM).

The average aspect ratio (the ratio of the average length to the average diameter) of the fibrous carbon is, for example, preferably 10 or more and 10,000 or less, more preferably 100 or more, still more preferably 1,000 or more. The use of the fibrous carbon with an average aspect ratio in the range mentioned above allows the positive active material layer to produce better conductivity, thereby further reducing the initial alternating-current resistance. It is to be noted that the "average length" of the fibrous carbon is defined as the average value of the lengths of arbitrary ten particles of the fibrous carbon observed with an SEM or a TEM. In the calculation of the average aspect ratio, the ten particles of the fibrous carbon for determining the average diameter are preferably the same as the ten particles of the fibrous carbon for determining the average length, but the average diameter and the average length may be each determined for ten different particles of the fibrous carbon, and the ratio of the average length to the average diameter may be defined as the average aspect ratio. More specifically, the average aspect ratio refers to the average value of the respective aspect ratios (of the lengths to the diameters) of arbitrary ten particles of the fibrous carbon observed with an SEM or a TEM, or the ratio of the average length of arbitrary ten particles of the fibrous carbon observed with an SEM or a TEM to the average diameter of arbitrary ten different particles of the fibrous carbon observed therewith.

The average lattice spacing (d₀₀₂) of a (002) plane of the fibrous carbon, determined by an X-ray diffraction method with the use of a CuKα ray, is preferably less than 0.340 nm. When the average lattice spacing (d₀₀₂) of the (002) plane of the fibrous carbon is small with a high degree of crystallinity as described above, the conductivity of the positive active material layer is further increased. It is to be noted that the lower limit of the average lattice spacing (d₀₀₂) of the (002) plane of the fibrous carbon can be, for example, 0.330 nm. In addition, the full width at half maximum of a peak corresponding to the (002) plane of the fibrous carbon, determined by X-ray diffraction with the use of a CuKα ray, is, for example, 0.5° or more. The full width at half maximum for the peak corresponding to the (002) plane of the fibrous carbon is preferably less than 0.7°.

Fibrous carbon can be obtained by, for example, a method in which a polymer is formed into a fibrous form by a spinning method or the like and heat-treated under an inert atmosphere, a vapor phase growth method in which an organic compound is reacted at a high temperature in the presence of a catalyst, or the like. As the fibrous carbon, fibrous carbon obtained by a vapor phase growth method (vapor phase growth method fibrous carbon) is preferable. Commercially available fibrous carbon can be used.

The lower limit of the content of the fibrous carbon in the positive active material layer is preferably 0.05% by mass, more preferably 0.2% by mass, still more preferably 0.5% by mass. When the fibrous carbon is single-walled carbon nanotubes, the lower limit of the content of the single-walled carbon nanotubes in the positive active material layer is preferably 0.07% by mass, more preferably 0.08% by mass. When the fibrous carbon is multi-walled carbon nanotubes, the lower limit of the content of the multi-walled carbon nanotubes in the positive active material layer is preferably 0.3% by mass, more preferably 0.5% by mass. The upper limit of the content of the fibrous carbon is preferably 3.0% by mass, and more preferably 2.0% by mass. The content of the fibrous carbon is set to be equal to or more than the lower limit mentioned above, thereby allowing the conductivity of the positive active material layer to be further enhanced, and allowing the initial alternating-current resistance to be further reduced. In contrast, the content of the fibrous carbon is set to be equal to or less then the upper limit mentioned above, thereby increasing the stability of a positive composite paste in the manufacture, and in addition, allowing the production cost to be also reduced.

The positive active material layer may contain therein other conductive agents besides the fibrous carbon, and the other conductive agents may be particulate. Examples of the other conductive agents include carbonaceous materials other than the fibrous carbon, metals, and conductive ceramics. Examples of the carbonaceous materials include graphite, non-graphitic carbon, and graphene-based carbon. Examples of the non-graphitic carbon include carbon black (CB). Examples of the carbon black include furnace black, acetylene black, and ketjen black. Examples of the graphene-based carbon include graphene and fullerene. Among these examples, carbonaceous materials other than the fibrous carbon are preferable, particulate carbonaceous materials are more preferable, and carbon black is still more preferable. When the positive active material layer contains a particulate conductive agent as another conductive agent, the fibrous carbon is preferably carbon nanotubes.

The content of all of the conductive agents (fibrous carbon and the other conductive agents) in the positive active material layer in the positive active material layer is, for example, preferably 0.05% by mass or more and 13% by mass or less, more preferably 0.07% by mass or more and 12% by mass or less, still more preferably 0.08% by mass or more and 11% by mass or less. When the fibrous carbon is multi-walled carbon nanotubes, the content of all of the conductive agents (fibrous carbon and the other conductive agents) in the positive active material layer is, for example, preferably 0.3% by mass or more and 10% by mass or less, more preferably 0.5% by mass or more and 8% by mass or less, and is still more preferably 1% by mass or more and 6% by mass or less in some cases. The content of the other conductive agents excluding the fibrous carbon in the positive active material layer is, for example, 0.1% by mass or more and 10% by mass or less, preferably 1% by mass or more and 7% by mass or less, more preferably 2% by mass or more and 5% by mass or less. In addition, the content of the fibrous carbon with respect to all of the conductive agents (fibrous carbon and the other conductive agents) in the positive active material layer is preferably 10% by mass or more and 100% by mass or less, more preferably 20% by mass or more and 80% by mass or less, and is still more preferably 30% by mass or more and 50% by mass or less in some cases. The fibrous carbon and the conductive agents are used in combination so as to achieve such contents, thereby allowing a reduction in initial alternating-current resistance and a suppressed increase in alternating-current resistance in association with a charge-discharge cycle while reducing the production cost.

Examples of the binder include a solvent-based binder and an aqueous binder, and a solvent-based binder is preferable. The solvent-based binder refers to a binder that is dispersed or dissolved in an organic solvent.

Examples of the solvent-based binder include fluororesins (polytetrafluoroethylene (PTFE), polyvinylidene fluoride (PVDF), and the like), thermoplastic resins such as polyethylene, polypropylene and polyimide, copolymers of vinylidene fluoride and hexafluoropropylene, copolymers of ethylene and vinyl alcohol, polyacrylonitrile, polyphosphazene, polysiloxane, polyvinyl acetate, polymethyl methacrylate, polystyrene, polycarbonate, polyamide, polyamideimide, crosslinked polymers of cellulose and chitosan pyrrolidone carboxylate, and derivatives of chitin or chitosan, and fluororesins are preferable, and PVDF is more preferable. One, or two or more of the solvent-based binders can be used.

The content of the binder in the positive active material layer is preferably 0.3% by mass or more and 10% by mass or less, more preferably 0.5% by mass or more and 8% by mass or less, and is still more preferably 5% by mass or less in some cases. The content of the binder is set to be equal to or more than the lower limit mentioned above, thereby allowing the positive active material particles to be stably held. In addition, the content of the binder is set to be equal to or less than the upper limit mentioned above, thereby allowing the content of the positive active material particles to be increased to increase the energy density.

Examples of the thickener include polysaccharide polymers such as a carboxymethylcellulose (CMC) and a methylcellulose. When the thickener has a functional group that is reactive with lithium and the like, the functional group may be deactivated by methylation or the like in advance. In the case of using a thickener, the content of the thickener in the positive active material layer is preferably 5% by mass or less, further preferably 1% by mass or less. The technique disclosed herein can be preferably carried out in an aspect in which the positive active material layer contains no thickener.

The filler is not particularly limited. Examples of the filler include polyolefins such as polypropylene and polyethylene, inorganic oxides such as silicon dioxide, aluminum oxide, titanium dioxide, calcium oxide, strontium oxide, barium oxide, magnesium oxide, and aluminosilicate, hydroxides such as magnesium hydroxide, calcium hydroxide, and aluminum hydroxide, carbonates such as calcium carbonate, hardly soluble ionic crystals of calcium fluoride, barium fluoride, barium sulfate and the like, nitrides such as aluminum nitride and silicon nitride, and substances derived from mineral resources, such as talc, montmorillonite, boehmite, zeolite, apatite, kaolin, mullite, spinel, olivine, sericite, bentonite, and mica, and artificial products thereof. In the case of using a filler, the content of the filler in the positive active material layer is preferably 5% by mass or less, and more preferably 1% by mass or less. The technique disclosed herein can be preferably carried out in an aspect in which the positive active material layer contains no filler.

The positive active material layer may contain typical nonmetal elements such as B, N, P, F, Cl, Br, and I, typical metal elements such as Li, Na, Mg, Al, K, Ca, Zn, Ga, Ge, Sn, Sr, and Ba, or transition metal elements such as Sc, Ti, V, Cr, Mn, Fe, Co, Ni, Cu, Mo, Zr, Ta, Hf, Nb, and W as a component other than the first positive active material particles, the second positive active material particles, the fibrous carbon, and the other conductive agents, the binder, the thickener, and the filler as optional components.

### (Negative electrode)

The negative electrode includes a negative substrate and a negative active material layer disposed directly on the negative substrate or over the negative substrate with an intermediate layer interposed therebetween. The configuration of the intermediate layer is not particularly limited, and can be selected from the configurations exemplified for the positive electrode, for example.

The negative substrate has conductivity. As the material of the negative substrate, a metal such as copper, nickel, stainless steel, nickel-plated steel, or aluminum, an alloy thereof, a carbonaceous material, or the like is used. Among these metals and alloys, copper or a copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 pm or more and 35 pm or less, more preferably 3 pm or more and 30 pm or less, still more preferably 4 pm or more and 25 pm or less, particularly preferably 5 pm or more and 20 pm or less. The average thickness of the negative substrate falls within the range mentioned above, thereby allowing the energy density per volume of the secondary battery to be increased while increasing the strength of the negative substrate.

The negative active material layer includes a negative active material. The negative active material layer includes optional components such as a conductive agent, a binder, a thickener, and a filler, if necessary. The optional components such as a conductive agent, a binder, a thickener, and a filler can be selected from the materials exemplified for the positive electrode. As the binder, an aqueous binder may be used. Examples of the aqueous binder include an ethylene-propylene-diene rubber (EPDM), a sulfonated EPDM, and a styrene-butadiene rubber (SBR).

The negative active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The negative active material can be appropriately selected from known negative active materials. As the negative active material for a lithium ion secondary battery, a material capable of occluding and releasing lithium ions is typically used. Examples of the negative active material include metal Li; metals or metalloids such as Si and Sn; metal oxides or metalloid oxides such as oxides of Si, oxides of Ti, and oxides of Sn; titanium-containing oxides such as Li₄Ti₅O₁₂, LiTiO₂, and TiNb₂O₇; polyphosphoric acid compounds; silicon carbides; and carbon materials such as graphite and non-graphitic carbon (easily graphitizable carbon or hardly graphitizable carbon). Among these materials, graphite and non-graphitic carbon are preferable. In the negative active material layer, one of these materials may be used alone, or two or more thereof may be used in mixture.

The term "graphite" refers to a carbon material in which the average lattice spacing (d₀₀₂) of a (002) plane determined by an X-ray diffraction method before charge-discharge or in a discharged state is 0.33 nm or more and less than 0.34 nm. Examples of the graphite include natural graphite and artificial graphite. From the viewpoint of excellent input/output characteristics, natural graphite is preferable.

The term "non-graphitic carbon" refers to a carbon material in which the average lattice spacing (d₀₀₂) of a (002) plane determined by an X-ray diffraction method before charge-discharge or in a discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from a petroleum pitch, a petroleum coke or a material derived from a petroleum coke, a plant-derived material, and an alcohol-derived material.

In this regard, the "discharged state" of the carbon material such as graphite means a state discharged such that charge transporting ions such as lithium that can be occluded and released in association with charge-discharge are sufficiently released from the carbon material that is a negative active material. For example, the "discharged state" refers to a state where the open circuit voltage is 0.7 V or higher in a half cell that has, as a working electrode, a negative electrode including a carbon material as a negative active material, and has metal lithium (Li) as a counter electrode.

The term "hardly graphitizable carbon" refers to a carbon material in which the d₀₀₂ is 0.36 nm or more and 0.42 nm or less.

The term "easily graphitizable carbon" refers to a carbon material in which the d₀₀₂ is 0.34 nm or more and less than 0.36 nm.

The negative active material is typically particles (powder). The average particle size of the negative active material can be, for example, 1 nm or more and 100 pm or less. When the negative active material is a carbon material, a titanium-containing oxide, or a polyphosphoric acid compound, the average particle size thereof may be 1 pm or more and 100 pm or less. When the negative active material is Si, Sn, an oxide of Si, an oxide of Sn, or the like, the average particle size thereof may be 1 nm or more and 1 pm or less. By setting the average particle size of the negative active material to be equal to or more than the lower limit mentioned above, the negative active material is easily produced or handled. By setting the average particle size of the negative active material to be equal to or less than the upper limit mentioned above, the electron conductivity of the negative active material layer is improved. A crusher, a classifier, or the like is used in order to obtain a powder with a predetermined particle size. The crushing method and the classification method can be selected from, for example, the methods exemplified for the positive electrode. When the negative active material is a metal such as metal Li, the negative active material may have the form of a foil.

The content of the negative active material in the negative active material layer is preferably 60% by mass or more and 99% by mass or less, more preferably 90% by mass or more and 98% by mass or less. The content of the negative active material falls within the range mentioned above, thereby allowing a balance to be achieved between the increased energy density and manufacturability of the negative active material layer.

### (Separator)

The separator can be appropriately selected from known separators. As the separator, for example, a separator composed of only a substrate layer, a separator where a heat resistant layer including heat resistant particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of liquid retaining property of the nonaqueous electrolyte. As the material for the substrate layer of the separator, for example, a polyolefin such as polyethylene or polypropylene is preferable from the viewpoint of shutdown function, and polyimide, aramid, or the like is preferable from the viewpoint of resistance to oxidative decomposition. As the substrate layer of the separator, a material obtained by combining these resins may be used.

The heat resistant particles included in the heat resistant layer preferably have a mass loss of 5% or less in the case of temperature increase from room temperature to 500°C under the air atmosphere of 1 atm, and more preferably have a mass loss of 5% or less in the case of temperature increase from room temperature to 800°C. Examples of materials that have a mass loss equal to or less than a predetermined value include inorganic compounds. Examples of the inorganic compound include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, simple substances or complexes of these substances may be used alone, or two or more thereof may be used in mixture. Among these inorganic compounds, the silicon oxide, aluminum oxide, or aluminosilicate is preferable from the viewpoint of the safety of the energy storage device.

The porosity of the separator is preferably 80% by volume or less from the viewpoint of strength, and is preferably 20% by volume or more from the viewpoint of discharge performance. The "porosity" herein is a volume-based value, which means a value measured with a mercury porosimeter.

As the separator, a polymer gel composed of a polymer and a nonaqueous electrolyte may be used. Examples of the polymer include a polyacrylonitrile, a polyethylene oxide, a polypropylene oxide, a polymethyl methacrylate, a polyvinyl acetate, a polyvinylpyrrolidone, and a polyvinylidene fluoride. The use of the polymer gel has the effect of suppressing liquid leakage. As the separator, the polymer gel may be used in combination with a porous resin film, a nonwoven fabric, or the like as described above.

### (Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution includes a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, solvents in which some of the hydrogen atoms included in these compounds are substituted with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these examples, EC is preferable.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these examples, EMC is preferable.

As the nonaqueous solvent, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, the volume ratio of the cyclic carbonate to the chain carbonate (cyclic carbonate : chain carbonate) preferably falls within the range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these examples, the lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these examples, an inorganic lithium salt is preferable, and LiPF₆ is more preferable.

The content of the electrolyte salt in the nonaqueous electrolyte solution is, at 20°C under 1 atm, preferably 0.1 mol/dm³ or more and 2.5 mol/dm³ or less, more preferably 0.3 mol/dm³ or more and 2.0 mol/dm³ or less, further preferably 0.5 mol/dm³ or more and 1.7 mol/dm³ or less, particularly preferably 0.7 mol/dm³ or more and 1.5 mol/dm³ or less. The content of the electrolyte salt falls within the range mentioned above, thereby allowing the ionic conductivity of the nonaqueous electrolyte solution to be increased.

The nonaqueous electrolyte solution may include an additive, besides the nonaqueous solvent and the electrolyte salt. Examples of the additive include oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used alone, or two or more thereof may be used in mixture.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to the total mass of the nonaqueous electrolyte solution. The content of the additive falls within the range mentioned above, thereby making it possible to improve capacity retention performance or cycle performance after high-temperature storage, and to further improve safety.

For the nonaqueous electrolyte, a solid electrolyte may be used, or a nonaqueous electrolyte solution and a solid electrolyte may be used in combination.

The solid electrolyte can be selected from any material with ionic conductivity, which is solid at normal temperature (for example, 15°C to 25°C), such as lithium, sodium and calcium. Examples of the solid electrolyte include a sulfide solid electrolyte, an oxide solid electrolyte, a nitride solid electrolyte, a polymer solid electrolyte, and a gel polymer electrolyte.

Examples of the sulfide solid electrolyte include Li₂S-P₂S₅, LiI-Li₂S-P₂S₅, and Li₁₀Ge-P₂S₁₂ in the case of a lithium ion secondary battery.

The shape of the energy storage device according to the present embodiment is not to be considered particularly limited, and examples thereof include cylindrical batteries, prismatic batteries, flattened batteries, coin batteries and button batteries.

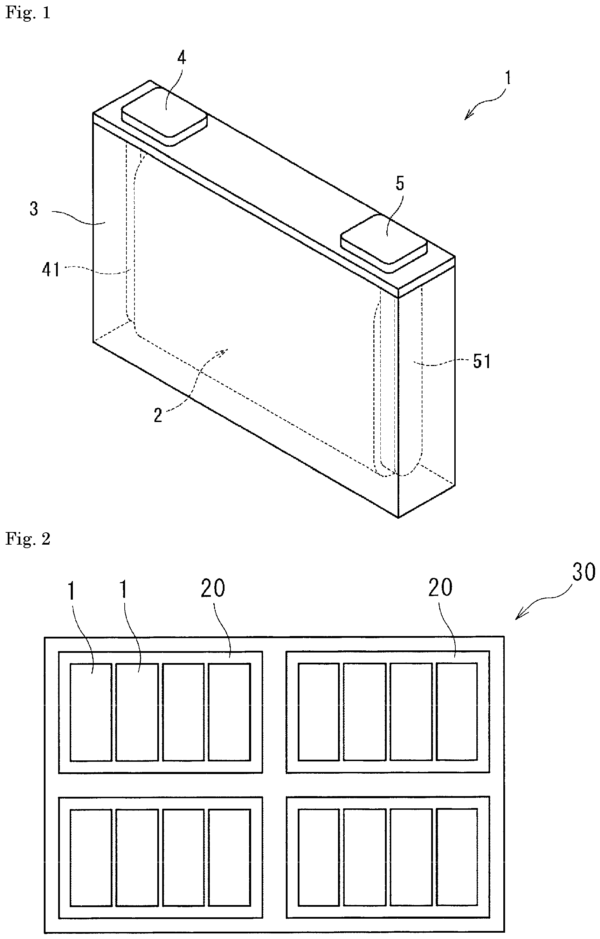

Fig. 1 illustrates an energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Configuration of energy storage apparatus>

The energy storage device according to the present embodiment can be mounted as an energy storage apparatus including an energy storage unit (battery module) configured with a plurality of energy storage devices assembled, on power sources for automobiles such as electric vehicles (EVs), hybrid vehicles (HEVs), and plug-in hybrid vehicles (PHEVs), power sources for electronic devices such as personal computers and communication terminals, power sources for power storage, or the like. In this case, the technique of the present invention may be applied to at least one energy storage device included in the energy storage apparatus.

An energy storage apparatus according to an embodiment of the present invention includes two or more energy storage devices, and includes one or more energy storage devices according to the embodiment mentioned above (hereinafter, referred to as a "second embodiment"). The technique according to an embodiment of the present invention may be applied to at least one energy storage device included in the energy storage apparatus according to the second embodiment, and the energy storage apparatus may include one energy storage device according to an embodiment of the present invention and include one or more energy storage devices that are not according to an embodiment of the present invention, or may include two or more energy storage devices according to an embodiment of the present invention. Fig. 2 illustrates an example of an energy storage apparatus 30 obtained by further assembling energy storage units 20 that each have two or more electrically connected energy storage devices 1 assembled. The energy storage apparatus 30 according to the second embodiment may include a busbar (not shown) that electrically connects two or more energy storage devices 1, a busbar (not shown) that electrically connects two or more energy storage units 20, and the like. The energy storage unit 20 or the energy storage apparatus 30 may include a state monitor (not shown) that monitors the state of one or more energy storage devices 1.

### <Method for manufacturing energy storage device>

A method for manufacturing the energy storage device of the present embodiment can be appropriately selected from known methods. The manufacturing method includes, for example, preparing an electrode assembly, preparing a nonaqueous electrolyte, and housing the electrode assembly and the nonaqueous electrolyte in a case. Preparing the electrode assembly includes: preparing a positive electrode and a negative electrode, and forming an electrode assembly by stacking or winding the positive electrode and the negative electrode with a separator interposed therebetween.

The positive electrode mentioned above can be fabricated, for example, by applying a positive composite paste to a positive substrate directly or with an intermediate layer interposed therebetween, and drying the paste. The positive composite paste includes respective components constituting the positive active material layer, such as the first positive active material particles, the second positive active material particles, and the fibrous carbon, and a binder as an optional component. The positive composite paste typically further includes a dispersion medium. As the dispersion medium, an organic solvent is suitably used as described above. Examples of the organic solvent that is a dispersion medium for use in preparing the positive composite paste include N-methylpyrrolidone (NMP) and toluene.

Housing the nonaqueous electrolyte in a case can be appropriately selected from known methods. For example, in the case of using a nonaqueous electrolyte solution for the nonaqueous electrolyte, the nonaqueous electrolyte solution may be injected from an inlet formed in the case, and the inlet may be then sealed.

### <Other embodiments>

It is to be noted that the energy storage device according to the present invention is not to be considered limited to the embodiment mentioned above, and various changes may be made without departing from the scope of the present invention. For example, the configuration according to one embodiment can be added to the configuration according to another embodiment, or a part of the configuration according to one embodiment can be replaced with the configuration according to another embodiment or a well-known technique. Furthermore, a part of the configuration according to one embodiment can be deleted. In addition, a well-known technique can be added to the configuration according to one embodiment.

While the case where the energy storage device is used as a nonaqueous electrolyte secondary battery (for example, lithium ion secondary battery) that can be charged and discharged has been described in the embodiment mentioned above, the type, shape, dimensions, capacity, and the like of the energy storage device are arbitrary. The present invention can also be applied to various secondary batteries, and capacitors such as electric double layer capacitors and lithium ion capacitors.

### EXAMPLES

Hereinafter, the present invention will be described more specifically with reference to examples. The present invention is not limited to the following examples.

### [Example 1]

### (Fabrication of positive electrode)

A mixture containing: LiNi_{0.6}Co_{0.2}Mn_{0.2}O₂ with the ratio of the particle size to the average primary particle size being 2.0 and the average particle size being 4.0 pm as the first positive active material particles; and LiNi_{0.6}Co_{0.2}Mn_{0.2}O₂ with the ratio of the particle size to the average primary particle size being 28.8 and the average particle size being 11.5 pm as the second positive active material particles at 20 : 80 in ratio by mass was used as positive active material particles. Fibrous carbon (CNT) and carbon black were used as conductive agents, and a polyvinylidene fluoride (PVDF) was used as a binder. The ratios by mass of the CNT and carbon black were set to 0.5:3.5. Then, an appropriate amount of N-methyl-pyrrolidone (NMP) was added to the mixture of the positive active material particles, CNT, carbon black, and binder to adjust the viscosity, thereby preparing a positive composite paste. The ratios by mass of the positive active material particles, CNT, carbon black, and binder in the positive composite paste was set to 94.5 : 0.5 : 3.5 : 1.5 in terms of solid content. As the CNT, multi-walled carbon nanotubes were used. The positive composite paste was applied onto a surface of an aluminum foil that served as a positive substrate, and dried to prepare a positive active material layer. Thereafter, roll pressing was performed to obtain a positive electrode according to Example 1.

### (Fabrication of negative electrode)

Prepared was a negative composite paste including graphite as a negative active material, a styrene butadiene rubber (SBR) as a binder, and a carboxymethyl cellulose (CMC) as a thickener at ratios by mass of 97.8 : 1.0 : 1.2 (in terms of solid content) with water as a dispersion medium. The negative composite paste was applied onto a surface of a copper foil that served as a negative substrate, and dried to form a negative active material layer. Thereafter, roll pressing was performed to obtain a negative electrode.

### (Assembly of energy storage device)

An energy storage device with the positive electrode and the negative electrode used was assembled. Further, a solution obtained by dissolving a lithium hexafluorophosphate (LiPFs) as an electrolyte salt at a concentration of 1.0 mol/dm³ in a nonaqueous solvent obtained by mixing EC (ethylene carbonate), PC (propylene carbonate), and EMC (ethylmethyl carbonate) at ratios by volume of 25 : 5 : 70 was used as a nonaqueous electrolyte, and a polyolefin microporous membrane was used as a separator.

### [Examples 2 and 3]

Energy storage devices according to Examples 2 and 3 were fabricated similarly to Example 1 except for ratios by mass (in terms of solid content) of the fibrous carbon and carbon black in the positive composite paste as in Table 1.

### [Comparative Example 1]

An energy storage device according to Comparative Example 1 was fabricated similarly to Example 1 except for using no fibrous carbon and for the ratio by mass (in terms of solid content of the carbon black) in the positive composite paste as in Table 1.

### [Comparative Example 2]

An energy storage device according to Comparative Example 2 was fabricated similarly to Comparative Example 1 except for using only LiNi_{0.6}Co_{0.2}Mn_{0.2}O₂ with the ratio of the particle size to the average primary particle size being 24 and the average particle size being 12.0 pm as positive active material particles.

### [Comparative Example 3]

An energy storage device according to Comparative Example 3 was fabricated similarly to Example 3 except for using only LiNi_{0.6}Co_{0.2}Mn_{0.2}O₂ with the ratio of the particle size to the average primary particle size being 24 and the average particle size being 12.0 pm as positive active material particles.

### [Comparative Example 4]

An energy storage device according to Comparative Example 4 was fabricated similarly to Comparative Example 2 except for using only LiNi_{0.6}Co_{0.2}Mn_{0.2}O₂ with the ratio of the particle size to the average primary particle size being 2.2 and the average particle size being 4.4 pm as positive active material particles.

### [Comparative Example 5]

An energy storage device according to Comparative Example 5 was fabricated similarly to Example 3 except for using only LiNi_{0.6}Co_{0.2}Mn_{0.2}O₂ with the ratio of the particle size to the average primary particle size being 2.2 and the average particle size being 4.4 pm as positive active material particles.

### [Evaluation]

### (Initial charge-discharge)

The respective energy storage devices were subjected to initial charge-discharge under the following conditions. The energy storage devices were subjected to constant current charge to 4.25 V at a charge current of 0.2 C at 25°C, and then constant voltage charge at 4.25 V. With regard to the charge termination conditions, the charge was performed until the charge current reached 0.01 C. After the charge, a pause of 10 minutes was provided, and then, the energy storage devices were subjected to constant current discharge to 2.75 V at a discharge current of 0.2 C at 25°C. The discharge capacity at this time was defined as an "initial discharge capacity".

### (Initial alternating-current resistance)

For each of the energy storage devices subjected to the initial charge-discharge, the alternating-current resistance (ACR) at 1 kHz was measured at SOC of 0% at 25°C, and defined as an "initial ACR". The alternating-current resistance was measured by a known method. Table 1 shows the initial ACR [mΩ] for Examples 1 to 3 and Comparative Examples 1 to 5. Based on whether the initial ACR was 35.0 mΩ or more, o and × were determined.

### (Charge-discharge cycle test at 45°C)

Each of the electrolyte energy storage devices was stored for 5 hours in a thermostatic chamber at 45°C, then charged to 4.25 V at a constant current with a charge current of 1.0 C, and then subjected to constant voltage charge at 4.25 V With regard to the charge termination conditions, the charge was performed until the charge current reached 0.01 C. Thereafter, the energy storage device was discharged to 2.75 V at a constant current of 0.1 C. In all of the cycles, a pause time of 10 minutes was set after the charge and after the discharge. The steps of charge and discharge were regarded as one cycle, and the cycle was repeated for 50 times. The charge, the discharge, and the pause were all carried out in a thermostatic chamber at 45°C.

### (ACR increase rate)

The alternating-current resistance of each of the energy storage devices subjected to the above-mentioned charge-discharge cycle test at 45°C was determined as follows. Each of the energy storage devices subjected to the charge-discharge cycle test at 45°C was allowed to stand for 5 hours in a thermostatic chamber at 25°C. After the standing, the alternating-current resistance at 1 kHz was measured at SOC of 0% for each of the energy storage devices, and defined as an "ACR after charge-discharge cycle at 45°C". The alternating-current resistance was measured by a known method. The value obtained by expressing the ratio of the "ACR after charge-discharge cycle at 45°C" to "initial ACR" in terms of percentage was determined as an "ACR increase rate after charge-discharge cycle at 45°C". Then, for each particle form of the positive active material particles, the relative ratio was calculated when each of the test examples (Comparative Example 1, Comparative Example 2, and Comparative Example 4) in which the conductive agent was only the carbon black was regarded as 100. Table 1 shows the relative ratio for Examples 1 to 3 and Comparative Examples 1 to 5.

**[Table 1]**

| | First positive active material particles | | Second positive active material particles | | Positive active material | Conductive agent | | Evaluation | | |
|---|---|---|---|---|---|---|---|---|---|---|
| | Average particle size [µm] | Ratio of particle size to average primary particle size | Average particle size [µm] | Ratio of particle size to average primary particle size | Ratio by mass of first positive active material particles/ second positive active material particles | Material | Ratio by mass of CB/CNT | Initial ACR [mΩ] | | Relative ratio of ACR increase rate after charge-discharge cycle with respect to test example with conductive agent of only CB |
| Example 1 | **4.0** | **2.0** | **11.5** | **28.8** | **20/80** | **CB CNT** | **3.5/0.5** | **32.6** | **○** | **94** |
| Example 2 | **4.0** | **2.0** | **11.5** | **28.8** | **20/80** | **CB CNT** | **3.0 / 1.0** | **30.5** | **○** | **93** |
| Example 3 | **4.0** | **2.0** | **11.5** | **28.8** | **20/80** | **CB CNT** | **2.5/1.5** | **29.1** | **○** | **92** |
| Comparative Example 1 | **4.0** | **2.0** | **11.5** | **28.8** | **20/80** | **CB** | **4.0/0** | **35.2** | **x** | **100** |
| Comparative Example 2 | - | - | **12.0** | **24** | **0/100** | **CB** | **4.0/0** | **30.3** | **○** | **100** |
| Comparative Example 3 | - | - | **12.0** | **24** | **0/100** | **CB CNT** | **2.5/1.5** | **30.0** | **O** | **99** |
| Comparative Example 4 | **4.4** | **2.2** | **-** | **-** | **100/0** | **CB** | **4.0/0** | **35.4** | **x** | **100** |
| Comparative Example 5 | **4.4** | **2.2** | **-** | **-** | **100/0** | **CB CNT** | **2.5/1.5** | **29.9** | **○** | **97** |

From the comparison between: Examples 1 to 3 with the positive active material layer containing the single particle-based first positive active material particles, the secondary particle-based second positive active material particles, and the fibrous carbon and carbon black as the conductive agent; and Comparative Example 1 with the conductive agent being only the carbon black, the use of the single particle-based first positive active material particles and the secondary particle-based second positive active material particles in combination with the fibrous carbon is found to be capable of reducing the initial alternating-current resistance and suppressing an increase in alternating-current resistance in association with a charge-discharge cycle.

In contrast, from the comparison between Comparative Examples 2 and 3 with the positive active material layer containing only the secondary particle-based positive active material particles, and the comparison between Comparative Examples 4 and 5 with the positive active material layer containing only the single particle-based positive active material particles, the effect of suppressing an increase in alternating-current resistance in association with a charge-discharge cycle was small even in combination with the fibrous carbon, when the positive active material layer failed to contain both the single particle-based first positive active material particles and the second positive active material particles as secondary particles.

As described above, it has been demonstrated that the energy storage device can reduce the initial alternating-current resistance and suppress an increase in alternating-current resistance in association with a charge-discharge cycle. Accordingly, the energy storage device can also be suitably applied to high-power applications.

### DESCRIPTION OF REFERENCE SIGNS

1: Energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. An energy storage device comprising a positive electrode including a positive active material layer,
wherein
the positive active material layer contains first positive active material particles, second positive active material particles, and fibrous carbon,
the first positive active material particles are primary particles or secondary particles of primary particles aggregated,
a ratio of a particle size to an average primary particle size for the first positive active material particles is 3 or less,
the second positive active material particles are secondary particles of primary particles aggregated, and
a ratio of a particle size to an average primary particle size for the second positive active material particles is more than 3.

2. The energy storage device according to claim 1, wherein the first positive active material particles is smaller in average particle size than the second positive active material particles.

3. The energy storage device according to claim 1 or 2, wherein a content ratio of the second active material particles to a total content of the first positive active material particles and the second positive active material particles is 70% by mass or more and 90% by mass or less.

4. The energy storage device according to any one of claim 1 or 2, wherein the positive active material layer further contains another conductive agent besides the fibrous carbon.

5. The energy storage device according to claim 4, wherein the other conductive agent is a particulate conductive agent.

6. The energy storage device according to claim 5, wherein the fibrous carbon is carbon nanotubes.

7. The energy storage device according to claim 6, wherein the carbon nanotubes are single-walled carbon nanotubes, and a content of the single-walled carbon nanotubes in the positive active material layer is 0.07% by mass or more.

8. The energy storage device according to claim 6, wherein the carbon nanotubes are multi-walled carbon nanotubes, and a content of the multi-walled carbon nanotubes in the positive active material layer is 0.3% by mass or more.

9. An energy storage apparatus comprising two or more energy storage devices, and comprising one or more energy storage devices according to claim 1 or 2.
